# EUROPEAN PATENT SPECIFICATION

(11) **EP 2 431 242 B1**
(45) Date of publication and mention of the grant of the patent: **12.02.2014**
(21) Application number: 10425298.6
(22) Date of filing: 16.09.2010
(51) Int. Cl.: B60T 7/22, B60K 28/00, B60K 31/00, B60W 30/08, B65F 3/00

(54) **Safety system for vehicle, especially industrial or commercial or passenger transport vehicle**
Sicherheitssystem für ein Fahrzeug, insbesondere ein industrielles oder kommerzielles Fahrzeug oder ein Fahrzeug zum Personentransport
Système de sécurité pour un véhicule, en particulier un véhicule industriel ou commercial ou de transport de passagers

(43) Date of publication of application: 21.03.2012
(73) Proprietor: Iveco S.p.A., 10156 Torino (IT)
(72) Inventor: Stuerner, Johann, 89079 Ulm (DE); Baur, Franz, 88480 Achstetten (DE); Leoka, Georg, 89075 Ulm (DE)
(74) Representative: Borsano, Corrado

(56) References cited:
- DE-A1-102009 001 183
- DE-C1- 19 734 096
- FR-A1- 2 816 432
- US-A1- 2008 189 000

## Description

### Application field of the invention

The present invention refers to a safety system for vehicle, especially industrial or commercial or passenger transport vehicle.

### Description of the prior art

A vehicle performing a controlled or uncontrolled rearward movement generates a situation that endangers people's safety, especially if it is an industrial or commercial or passenger transport vehicle, moving in an area where one or more persons are present and can be run over.

The problem is particularly felt in case of specialty vehicles, such as those used for waste collection, where a person may normally stand on a special footboard placed on the rear part of the vehicle, or be working on the ground behind the vehicle.

Examples of the solutions indicated by the prior art are given in FR2816432 or US2008/189000, whose features are in the preamble of claim 1.

The solutions known in the art for controlling the safety of vehicle's rearward movements cannot solve all the critical situations, for example in case the vehicle is in neutral on an uphill slope, or in case the vehicle is on a uphill slope with the forward gear engaged and with the clutch disconnected.

### Summary of the invention

Therefore the aim of the present invention is to provide a safety system for a waste collecting vehicle, suitable for overcoming all the drawbacks mentioned above.

The object of the present invention is a safety system for a waste collecting vehicle according to claim 1.

In particular the object of the present invention is a safety system for waste collecting vehicle as described more fully in the claims, which are an integral part of the present description.

### Brief description of the figures

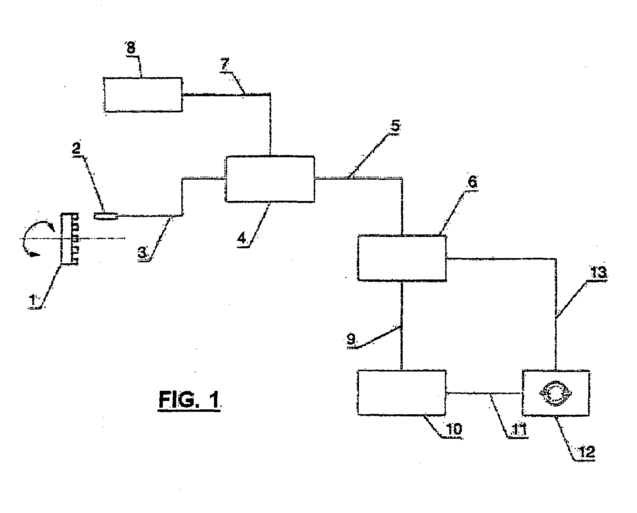

The purposes and advantages of this invention will become more clear from the following detailed description of an embodiment thereof (and of its variants), given as a non-limitative example, and from the attached figure 1 which shows a block scheme of the system that is object of the present invention.

### Detailed description of preferred embodiments of the invention

In the attached figure, numbers 1 and 2 refer to a device suitable for detecting the rotation and the direction of rotation of the elements of the vehicle kinematic chain, mounted on any component of the vehicle transmission kinematic chain which rotates as the vehicle moves, for example components such as gearbox elements, propeller shaft, differential, wheels, included their bearings and hub.

The device 1 is a toothed element of the differential.

In front of the toothed element 1, a bidirectional rotation sensor 2 is installed, for example an electromagnetic or magnetic sensor, connected for example by means of a cable 3, to a control element, for example a vehicular electronic control unit 4.

The control unit 4 is also connected, for example by means of the cable 7, to a sensor 8 which indicates the presence of a person behind the vehicle.

The sensor 8 may be for example electric, installed on the rear footboard of the waste collection vehicle, for example a compression sensor which detects the presence of a person on the footboard, or it may be a camera, an ultrasound sensor or a radar sensor or a thermal sensor, or other types of sensors known per se in the art, which are able to detect the presence of the person behind the vehicle.

The control unit 4 activates a safety system when it receives from the bidirectional sensor 2 a signal indicating the rearward movement of the vehicle, together with a signal from the sensor 8 indicating the presence of a person.

The safety system is suitable to brake the vehicle and stop it.

In particular, in this case the control unit 4 activates, for example by means of the cable 5, an activation element 6, which may be a solenoid valve or another device, even electronic, which activates, by means of the connection 9, the braking system 10, for example a pneumatic system, which in its turn activates, by means of the connection 11, the brakes 12 of the vehicle, stopping it.

The activation element 6 may also directly activate the brakes 12, by means of the connection 13, depending on the type of the vehicle's brake control.

The connections 9, 11 and 13 may be electronic, electric, pneumatic, or hydraulic.

As an alternative, instead of the vehicle's brakes it is possible to activate any additional brake which blocks the kinematic chain, for example a belt blocking a drum on the propeller shaft, or a brake integrated in the gearbox.

The control unit 4 may also control the engine switch off.

It will be apparent to the person skilled in the art that other alternative and equivalent embodiments of the invention can be conceived and reduced to practice without departing from the scope of the invention.

The advantages deriving from the use of this invention are evident.

The system is able to remove the risk of running over people that are behind the vehicle, also in case the reverse gear is engaged, but the vehicle's rearward movement is accidental.

Further technical advantages achieved by the invention are:
- a simple solution which does not occupy too much space on the vehicle;
- a low-cost solution;
- an easy-to-install solution on any type of industrial or commercial vehicle or bus/coach, or automobile, being adaptable to any type of hydraulic, pneumatic, electric braking system, also after having bought the vehicle.

From the description set forth above it will be possible for the person skilled in the art to embody the invention with no need of describing further construction details.

## Claims

1. Safety system for vehicle, especially an industrial or commercial or passenger transport vehicle, comprising:
- a device (1, 2) suitable to detect the rotation and the direction of rotation of components of the transmission kinematic chain of the vehicle;
- at least a sensor (8) suitable to detect the presence of a person behind the vehicle;
- a control element (4), suitable to stop the vehicle when it receives a signal indicating the rearward movement of the vehicle from said device (1, 2), together with a signal from said sensor (8) indicating the presence of a person behind the vehicle,
wherein said device (1, 2) suitable to detect the rotation and the direction of rotation of the components of the transmission kinematic chain of the vehicle, comprises:
- a first element (1) suitable to detect the rotation of the component;
- a bidirectional rotation sensor (2), suitable to detect the direction of rotation of the first element, and **characterized in that**
said first element (1) is a toothed element of the differential.

2. Safety system for vehicle as in claim 1, wherein said bidirectional rotation sensor (2) is an electromagnetic or a magnetic sensor.

3. Safety system for vehicle as in claim 1, wherein said control element (4), suitable to determine the vehicle stopping, is suitable to control the activation of the vehicle's brakes, and/or of an additional brake which blocks the kinematic chain, and/or the stopping of the vehicle's engine, in order to stop the vehicle.

4. Vehicle equipped with a safety system according to any of the previous claims.

## Patentansprüche

1. Sicherheitssystem für ein Fahrzeug, speziell ein Industrie- oder Geschäfts- oder Fahrgast-Transport-Fahrzeug, umfassend:
- eine Vorrichtung (1, 2), die geeignet ist zum Detektieren der Rotation und der Richtung der Rotation von Komponenten der kinematischen Kraftübertragungskette des Fahrzeugs;
- wenigstens einen Sensor (8), der geeignet ist zum Detektieren der Präsenz einer Person hinter dem Fahrzeug;
- ein Steuerungs-Element (4), das geeignet ist zum Stoppen des Fahrzeugs, wenn es von der Vorrichtung (1, 2) ein Signal erhält, das eine RückwärtsBewegung des Fahrzeugs anzeigt, zusammen mit einem Signal von dem Sensor (8), das die Präsenz einer Person hinter dem Fahrzeug anzeigt;
- worin die Vorrichtung (1, 2), die geeignet ist zum Detektieren der Rotation und der Richtung der Rotation der Komponenten der kinematischen Kraftübertragungskette des Fahrzeugs, umfaßt:
- ein erstes Element (1), das geeignet ist zum Detektieren der Rotation der Komponente;
- einen bidirektionalen Rotations-Sensor (2), der geeignet ist zum Detektieren der Richtung der Rotation des ersten Elements; und
- **dadurch gekennzeichnet ist, daß**
- das erste Element (1) ein mit Zähnen versehenes Element des Differentials ist.

2. Sicherheitssystem für ein Fahrzeug wie in Anspruch 1, worin der bidirektionale Rotations-Sensor (2) ein elektromagnetischer oder ein magnetischer Sensor ist.

3. Sicherheits-System für ein Fahrzeug wie in Anspruch 1, worin das Steuerungs-Element (4), das geeignet ist zum Ermitteln eines Stoppens des Fahrzeugs, geeignet ist zum Steuern der Aktivierung der Bremsen des Fahrzeugs und/oder einer zusätzlichen Bremse, die die kinematische Kette blockiert, und/oder des Stoppens des Motors des Fahrzeugs, um das Fahrzeug zu stoppen.

4. Fahrzeug, ausgestattet mit einem Sicherheits-System gemäß irgendeinem der vorigen Ansprüche.

## Revendications

1. Système de sécurité pour véhicule, en particulier pour un véhicule de transport industriel ou commercial ou de transport de passager, comprenant :
- un dispositif (1, 2) adapté pour détecter la rotation et la direction de rotation de composants de la chaîne cinématique de transmission du véhicule ;
- au moins un capteur (8) adapté pour détecter la présence d'une personne derrière le véhicule ;
- un élément de commande (4), adapté pour arrêter le véhicule lorsqu'il reçoit un signal indiquant le mouvement vers l'arrière du véhicule en provenance dudit dispositif (1, 2), conjointement à un signal en provenance dudit capteur (8) indiquant la présence d'une personne derrière le véhicule,
dans lequel ledit dispositif (1, 2), adapté pour détecter la rotation et la direction de rotation des composants de la chaîne cinématique de transmission du véhicule, comprend :
- un premier élément (1) adapté pour détecter la rotation du composant ;
- un capteur de rotation bidirectionnel (2) adapté pour détecter la direction de rotation du premier élément, et
**caractérisé en ce que**
ledit premier élément (1) est un élément denté du différentiel.

2. Système de sécurité pour véhicule selon la revendication 1, dans lequel ledit capteur de rotation bidirectionnel (2) est un capteur électromagnétique ou magnétique.

3. Système de sécurité pour véhicule selon la revendication 1, dans lequel ledit élément de commande (4), adapté pour déterminer l'arrêt du véhicule, est adapté pour commander l'activation des freins du véhicule, et/ou d'un frein supplémentaire qui bloque la chaîne cinématique, et/ou l'arrêt du moteur du véhicule, afin d'arrêter le véhicule.

4. Véhicule équipé d'un système de sécurité selon l'une quelconque des revendications précédentes.
